Europäisches Patentamt

European Patent Office

Office européen des brevets

(11) Publication number : **0 565 354 A1**

# (12) EUROPEAN PATENT APPLICATION

(21) Application number : 93302721.1

(51) Int. Cl.⁵ : **A01N 25/34**

(22) Date of filing : 07.04.93

(30) Priority : 08.04.92 JP 87327/92
23.06.92 JP 164599/92
17.02.93 JP 27971/93

(43) Date of publication of application :
13.10.93 Bulletin 93/41

(84) Designated Contracting States :
CH DE ES FR GB IT LI NL

(71) Applicant : SUMITOMO CHEMICAL
COMPANY, LIMITED
5-33, Kitahama 4-chome Chuo-ku
Osaka (JP)

(72) Inventor : Ogawa, Masao
11-8-303, Sonehigashinocho-2-chome
Toyonaka-shi (JP)
Inventor : Kawabata, Ikuko
7-9, Gakuen Higashimachi-1-chome
Nishi-ku, Kobe-shi (JP)
Inventor : Tagami, Manabu
Grin Kopo 1-504, 762-910, Takamaru
Higashitarumicho, Tarumi-ku, Kobe-shi (JP)
Inventor : Ohtsubo, Toshiro
20-10, Tomogaoka-2-chome
Sanda-shi (JP)
Inventor : Tsuda, Shigenori
5-1-509, Oe Kitakutsukakecho-1-chome
Nishikyo-ku, Kyoto-shi (JP)

(74) Representative : Coleiro, Raymond et al
MEWBURN ELLIS 2 Cursitor Street
London EC4A 1BQ (GB)

(54) **Pesticidal composition.**

(57) A composition containing (a) at least one pesticidally active ingredient, (b) at least one surface active agent, (c) at least one carbonate, (d) at least one solid acid, (e) at least one of talc, calcium stearate, magnesium stearate and titanium oxide, and (f) at least one of low-substituted hydroxypropyl cellulose, carboxymethyl cellulose, calcium carboxymethyl cellulose, crosslinked sodium carboxymethyl cellulose and crosslinked carboxymethyl starch, enables continuous production of tablets of high quality, which tablets are suitable for elimination or reduction of labour at the time of their application, exhibit improved disintegrability and dispersibility in water and diffusibility into water, and have a stable effect as an agent for controlling pests and weeds or as a plant growth regulator.

EP 0 565 354 A1

The present invention relates to a pesticidal composition especially useful for the manufacture of tablets, more especially fizzy tablets.

Fizzy tablets, which cause dusting more rarely than dusts, granules, etc., are advantageous in permitting laborsaving application such as throwing by hand. However, continuous production of such tablets is difficult. This is because when a pesticidal composition is tableted with a tableting machine or briquetting machine, troubles such as capping, lamination, etc. are caused, for example, by the adherence of the composition to a pestle or a roll. Therefore, it is desirable to ovecome these difficulties in order to develop tablets which can be industrially and continuously produced.

With such considerations in mind, we conducted extensive investigations and consequently found that a composition containing (a) at least one pesticidally active ingredient, (b) at least one surface active agent, (c) at least one carbonate, (d) at least one solid acid, (e) at least one member selected from the group consisting of talc, calcium stearate, magnesium stearate and titanium oxide, and (f) at least one member selected from the group consisting of low-substituted hydroxypropyl cellulose, carboxymethyl cellulose, calcium carboxymethyl cellulose, crosslinked sodium carboxymethyl cellulose and crosslinked carboxymethyl starch, is suitable for continuous production of satisfactory tablets .

According to the present invention, there are provided a pesticidal tablet which comprises (a) at least one pesticidally active ingredient, (b) at least one surface active agent, (c) at least one carbonate, (d) at least one solid acid, (e) at least one member selected from the group consisting of talc, calcium stearate, magnesium stearate and titanium oxide, and (f) at least one member selected from the group consisting of low-substituted hydroxypropyl cellulose, carboxymethyl cellulose, calcium carboxymethyl cellulose, crosslinked sodium carboxymethyl cellulose and crosslinked carboxymethyl starch, at least one of components (c) and (d) being water-soluble (hereinafter said pesticidal tablet is referred to as "the tablet of the present invention"); and a composition having a make-up suitable for continuous production of said pesticidal tablet (hereinafter said composition is referred to as "the composition of the present invention").

The pesticidally active ingredient used in the present invention includes pesticidally active substances or plant growth regulators incorporated as an active ingredient into insecticides, fungicides, herbicides and the like used in the fields of agriculture and horticulture; and pesticidally active substances incorporated as an active ingredient into insecticides and the like used in the fields of domestic disinfection and public sanitation. Although the pesticially active ingredient used in the present invention is not critical, there can be exemplified the following compounds, the active isomers thereof, and the mixtures thereof.

Examples of such compounds are given below together with a number for identification of the compound.

(1) α-cyano-3-phenoxybenzyl 2-(4-chlorophenyl)-3-methylbutyrate,

(2) (S)-α-cyano-3-phenoxybenzyl (S)-2-(4-chlorophenyl)-3-methylbutyrate,

(3) α-cyano-3-phenoxybenzyl 2,2,3,3-tetramethylcyclopropanecarboxylate,

(4) 3-phenoxybenzyl 3-(2,2-dichlorovinyl)-2,2-dimethylcyclopropanecarboxylate,

(5) 3-phenoxybenzyl chrysanthemate,

(6) 3-phenoxybenzyl (1R)-chrysanthemate,

(7) α-cyano-3-phenoxybenzyl 3-(2,2-dichlorovinyl)-2,2-dimethylcyclopropanecarboxylate,

(8) α-cyano-3-(4-bromophenoxy)benzyl 3-(2,2-dichlorovinyl)-2,2-dimethylcyclopropanecarboxylate,

(9) α-cyano-3-(4-fluorophenoxy)benzyl 3-(2,2-dichlorovinyl)-2,2-dimethylcyclopropanecarboxylate,

(10) α-cyano-3-(3-bromophenoxy)benzyl 3-(2,2-dichlorovinyl)-2,2-dimethylcyclopropanecarboxylate,

(11) α-cyano-3-(4-chlorophenoxy)benzyl 3-(2,2-dichlorovinyl)-2,2-dimethylcyclopropanecarboxylate,

(12) α-cyano-3-phenoxybenzyl chrysanthemate,

(13) α-cyano-3-phenoxybenzyl (1R)-chrysanthemate,

(14) α-cyano-3-(4-bromophenoxy)benzyl 2-(4-chlorophenyl)-3-methylbutyrate,

(15) α-cyano-3-(3-bromophenoxy)benzyl 2-(4-chlorophenyl)-3-methylbutyrate,

(16) α-cyano-3-(4-chlorophenoxy)benzyl 2-(4-chlorophenyl)-3-methylbutyrate,

(17) α-cyano-3-(4-fluorophenoxy)benzyl 2-(4-chlorophenyl)-3-methylbutyrate,

(18) α-cyano-3-phenoxybenzyl 2-(4-bromophenyl)-3-methylbutyrate,

(19) α-cyano-3-phenoxybenzyl 2-(4-tert-butylphenyl)-3-methylbutyrate,

(20) α-cyano-3-phenoxybenzyl 2-(3,4-methylenedioxyphenyl)-3-methylbutyrate,

(21) α-cyano-4-fluoro-3-phenoxybenzyl 3-(2,2-dichlorovinyl)-2,2-dimethylcyclopropanecarboxylate,

(22) α-cyano-3-phenoxybenzyl 2-(2-chloro-4-trifluoromethylanilino)-3-methylbutyrate,

(23) α-cyano-3-phenoxybenzyl 2-(4-difluoromethoxyphenyl)-3-methylbutyrate,

(24) α-cyano-3-phenoxybenzyl (S)-2-(4-difluoromethoxyphenyl)-3-methylbutyrate,

(25) α-cyano-(5-phenoxy-2-pyridyl)methyl 3-(2,2-dichlorovinyl)-2,2-dimethylcyclopropanecarboxylate,

(26) α-cyano-3-phenoxybenzyl 2,2-dimethyl-3-(1,2,2,2-tetrabromoethyl)cyclopropanecarboxylate,

(27) α-cyano-3-phenoxybenzyl 2,2-dimethyl-3-(1,2-dichloro-2,2-dibromoethyl)cyclopropanecarboxylate,

(28) α-cyano-3-phenoxybenzyl 1-(4-ethoxyphenyl)-2,2-dichlorocyclopropanecarboxylate,

(29) α-cyano-3-phenoxybenzyl 2,2-dimethyl-3-(2-chloro-2-trifluoromethylvinyl)cyclopropanecarboxylate,

(30) 2-(4-ethoxyphenyl)-2-methylpropyl 3-phenoxybenzyl ether,

(31) 2-(4-ethoxyphenyl)-3,3,3-trifluoropropyl 3-phenoxybenzyl ether,

(32) 2-methyl-3-phenylbenzyl (1R, trans)-2,2-dimethyl-3-(2-chloro-2-trifluoromethylvinyl)cyclopropanecarboxylate,

(33) 2,3,5,6-tetrafluoro-4-methylbenzyl (1R, trans)-2,2-dimethyl-3-(2-chloro-2-trifluoromethylvinyl)cyclopropanecarboxylate,

(34) 3,4,5,6-tetrahydrophthalimidomethyl chrysanthemate,

(35) 3,4,5,6-tetrahydrophthalimidomethyl (1R)-chrysanthemate,

(36) 3-allyl-2-methyl-4-oxocyclopent-2-enyl chrysanthemate,

(37) 3-allyl-2-methyl-4-oxocyclopent-2-enyl (1R)-chrysanthemate,

(38) (S)-2-methyl-4-oxo-3-(2-propynyl)cyclopent-2-enyl (1R)-chrysanthemate,

(39) 2-ethynyl-2-methyl-2-pentenyl (1R)-chrysanthemate,

(40) 5-benzyl-3-furylmethyl chrysanthemate,

(41) 5-benzyl-3-furylmethyl (1R)-chrysanthemate,

(42) α-cyano-3-(4-bromophenoxy)benzyl 3-(2,2-dibromovinyl)-2,2-dimethylcyclopropanecarboxylate,

(43) O,O-dimethyl O-(3-methyl-4-nitrophenyl) phosphorothioate,

(44) O,O-dimethyl S-[1,2-di(ethoxycarbonyl)ethyl] phosphorodithioate,

(45) O,O-dimethyl O-(4-cyanophenyl) phosphorothioate,

(46) O,O-dimethyl S-(α-ethoxycarbonylbenzyl) phosphorodithioate,

(47) O,O-diethyl O-(2-isopropyl-4-methyl-6-pyrimidinyl) phosphorothioate,

(48) O,O-dimethyl O-[3-methyl-4-(methylthio)phenyl] phosphorothioate,

(49) O-(4-bromo-2,5-dichlorophenyl) O,O-diethylphosphorothioate,

(50) 2-methoxy-4H-1,3,2-benzoxaphosphorin-2-sulfide,

(51) O,O-dimethyl O-(2,4,5-trichlorophenyl) phosphorothioate,

(52) O,O-diethyl O-(3,5,6-trichloro-2-pyridyl) phosphorothioate,

(53) O,O-dimethyl O-(3,5,6-trichloro-2-pyridyl) phosphorothioate,

(54) O,O-dimethyl O-(4-bromo-2,5-dichlorophenyl) phosphorothioate,

(55) dimethyl 2,2-dichlorovinylphosphate,

(56) O,S-dimethyl N-acetylphosphoroamidothioate,

(57) O-(2,4-dichlorphenyl) O-ethyl S-propyl phosphorodithioate,

(58) O,O-dimethyl S-(5-methoxy-1,3,4-thiadiazolin-2-on-3-ylmethyl) phosphorodithioate,

(59) dimethyl 2,2,2-trichloro-1-hydroxyethylphosphonate,

(60) O-ethyl O-(4-nitrophenyl) benzenephosphonothioate,

(61) O,O-dimethyl S-(N-methylcarbamoylmethyl) phosphorodithioate,

(62) 2-sec-butylphenyl N-methylcarbamate,

(63) 3-methylphenyl N-methylcarbamate,

(64) 3,4-dimethylphenyl N-methylcarbamate,

(65) 2-isopropoxyphenyl N-methylcarbamate,

(66) 1-naphthyl N-methylcarbamate,

(67) 2-isopropylphenyl N-methylcarbamate,

(68) O,O-diethyl S-[2-(ethylthio)ethyl] phosphorodithioate,

(69) S-methyl N-[(methylcarbamoyl)oxy]thioacetoimidate,

(70) trans-5-(4-chlorophenyl)-N-cyclohexyl-4-methyl-2-oxothiazolidin-3-carboxyamide,

(71) 2,3-dihydro-2,2-dimethyl-7-benzofuranyl N-dibutylaminothio-N-methylcarbamate,

(72) N,N-dimethyl-1,2,3-trithian-5-ylamine,

(73) 1,3-bis(carbamoylthio)-2-(N,N-dimethylamino)propane hydrochloride,

(74) ethyl N-[2,3-dihydro-2,2-dimethylbenzofuran-7-yloxycarbonyl(methyl)aminothio]-N-isopropyl-β-ala-ninate,

(75) 1-[3,5-dichloro-4-(3-chloro-5-trifluoromethyl-2-pyridyloxy)phenyl]-3-(2,6-difluorobenzoyl)urea,

(76) 1-(3,5-dichloro-2,4-difluorophenyl)-3-(2,6-difluorobenzoyl)urea,

(77) 1-[3,5-dichloro-4-(1,1,2,2-tetrafluoroethoxy)phenyl]-3-(2,6-difluorobenzoyl)urea,

(78) ethyl 2-(4-phenoxyphenoxy)ethylcarbamate,

(79) 2-tert-butyl-5-(4-tert-butylbenzylthio)-4-chloropyridazin-3(2H)-one,

(80) 1-[4-(2-chloro-4-trifluoromethylphenoxy)-2-fluorophenyl]-3-(2,6-difluorobenzoyl)urea,

(81) tert-butyl (E)-α-(1,3-dimethyl-5-phenoxypyrazol-4-ylmethyleneaminoxy)-p-toluate,

(82) 3,7,9,13-tetramethyl-5,11-dioxa-2,8,14-trithia-4,7,9,12-tetraazapentadeca-3,12-diene-6,10-dione,

(83) 1-(6-chloro-3-pyridylmethyl)-N-nitroimidazolidin-2-ylidenamine,

(84) 5-ethoxy-3-trichloromethyl-1,2,4-triadiazole,

(85) O,O-diisopropyl S-benzyl phosphorothiolate,

(86) O-ethyl S,S-diphenyl dithiophosphate,

(87) Polyoxin,

(88) Blastocidine S,

(89) 3,4-dichloropropionanilide,

(90) isopropyl N-(3-chlorophenyl)carbamate,

(91) S-ethyl N,N-dipropylthiolcarbamate,

(92) 3-methoxycarbonylaminophenyl N-(3-methylphenyl)carbamate,

(93) N-methoxymethyl-2-chloro-2',6'-diethylacetanilide,

(94) 2,6-dinitro-N,N-dipropyl-4-trifluoromethylaniline,

(95) S-(4-chlorobenzyl) N,N-diethylthiolcarbamate,

(96) S-ethyl N,N-hexamethylenethiolcarbamate,

(97) N-(1,1,3-trimethyl-2-oxa-4-indanyl)-5-chloro-1,3-dimethylpyrazol-4-carboxamide,

(98) 3'-isopropoxy-2-(trifluoromethyl)benzanilide,

(99) diisopropyl 1,3-dithiolan-21-ilidenemalonate,

(100) 1,2,5,6-tetrahydropyrrolo[3,2,1-i,j]quinolin-4-one,

(101) 3-allyloxy-1,2-benzoisothiazole-1,1-dioxide,

(102) 5-methyl[1,2,4]triazolo[3,4-b]benzothiazole,

(103) 1,2-bis(3-methoxycarbonyl-2-thioureido)benzene,

(104) 1-(4-chlorobenzyl)-1-cyclopentyl-3-phenylurea,

(105) Validamycin A

(106) 6-(3,5-dichloro-4-methylphenyl)-3(2H)-pyridazinone,

(107) Kasugamycin hydrochloride,

(108) methyl 1-(butylcarbamoyl)benzimidazole-3-carbamate,

(109) 3-(3,5-dichlorophenyl)-N-isopropyl-2,4-dioxoimidazolidine-1-carboxamide,

(110) 3-(3,5-dichlorophenyl)-5-methyl-5-vinyl-1,3-oxazolidine-2,4-dione,

(111) manganese ethylenebisdithiocarbamate,

(112) manganese and zinc ethylenebisdithiocarbamate,

(113) N-(trichloromethylthio)cyclohex-4-en-1,2-dicarboximide,

(114) 3'-isopropoxy-2-methylbenzanilide,

(115) 3-hydroxy-5-methylisoxazole,

(116) tetrachloroisophthalonitrile,

(117) 1,1'-iminodi(octamethylene)diguanidine,

(118) 1-(4-chlorophenoxy)-3,3-dimethyl-1-(1H-1,2,4-triazol-1-yl)butanone,

(119) (E)-4-chloro-2-(trifluoromethyl)-N-[1-(imidazol-1-yl)-2-propoxyethylidene]aniline,

(120) methyl N-(methoxyacetyl)-N-(2,6-dimethylphenyl)alaninate,

(121) 3-chloro-N-(3-chloro-5-trifluoromethyl-2-pyridyl)-2,6-dinitro-4-methylaniline,

(122) N-butoxymethyl-2-chloro-2',6'-diethylacetanilide,

(123) O-ethyl O-(5-methyl-2-nitrophenyl)-sec-butyl phosphoroamidethioate,

(124) ethyl N-chloroacetyl-N-(2,6-diethylphenyl)glycinate,

(125) 2-[1-methyl-2-(4-phenoxyphenoxy)ethoxy]pyridine,

(126) (E)-1-(4-chlorophenyl)-4,4-dimethyl-2-(1H-1,2,4-triazol-1-yl)-1-penten-3-ol,

(127) 1-(4-chlorophenyl)-4,4-dimethyl-2-(1H-1,2,4-triazol-1-yl)-1-pentan-3-ol,

(128) 2-bromo-N-(α,α-dimethylbenzyl)-3,3-dimethylbutanamide,

(129) 1-(1-methyl-1-phenylethyl)-3-(p-tolyl)urea,

(130) 2-(2-naphthoxy)propionanilide,

(131) 2-(2,4-dichloro-3-methylphenoxy)propionanilide,

(132) 4-(2,4-dichlorobenzoyl)-1,3-dimethyl-5-pyrazolyl p-toluenesulfonate,

(133) 4-(2,4-dichlorobenzoyl)-1,3-dimethyl-5-phenacyloxypytazole,

(134) 4-(2,4-dichloro-3-methylbenzoyl)-1,3-dimethyl-5-(4-methylphenacyloxy)pyrazole,

(135) 2,4,6-trichlorophenyl 4-nitrophenyl ether,

(136) 2,4-dichlorophenyl 3-methoxy-4-nitrophenyl ether,

(137) 2,4-dichlorophenyl 3-methoxycarbonyl-4-nitrophenyl ether,

(138) 2-benzothiazol-2-yloxy-N-methylacetanilide,

(139) 2',3'-dichloro-4-ethoxymethoxybenzanilide,

(140) 5-tert-butyl-3-(2,4-dichloro-5-isopropoxyphenyl)-1,3,4-oxadiazol-2(3H)-one,

(141) 2-amino-3-chloro-1,4-naphthoquinone,

(142) methyl 2-[3-(4,6-dimethoxypyrimidin-2-yl)ureidosulfonylmethyl]benzoate,

(143) 3,7-dichloroquinoline-8-carboxylic acid,

(144) ethyl 5-[3-(4,6-dimethoxypyrimidin-2-yl)ureidosulfonyl]-1-methylpyrazole-4-carboxylate,

(145) 3-chloro-2-[4-chloro-2-fluoro-5-(2-propynyloxy)phenyl]-4,5,6,7-tetrahydro-2H-indazole,

(146) O-(4-tert-butylphenyl) N-(6-methoxy-2-pyridyl)-N-methylthionocarbamate,

(147) O-(3-tert-butylphenyl) N-(6-methoxy-2-pyridyl)-N-methylthionocarbamate,

(148) O-(4-chloro-3-ethylphenyl) N-(6-methoxy-2-pyridyl)-N-methylthionocarbamate,

(149) O-(4-bromo-3-ethylphenyl) N-(6-methoxy-2-pyridyl)-N-methylthionocarbamate,

(150) O-(3-tert-butyl-4-chlorophenyl) N-(6-methoxy-2-pyridyl)-N-methylthionocarbamate,

(151) O-(4-trifluoromethylphenyl) N-(6-methoxy-2-pyridyl)-N-methylthionocarbamate,

(152) 1-(2-chlorobenzyl)-3-($\alpha$,$\alpha$-dimethylbenzyl)urea,

(153) N-(3,5-dichlorophenyl)-2,2-dimethylcyclopropane-1,2-dicarboximide,

(154) O-(2,6-dichloro-4-methoxyphenyl) O,O-dimethyl phosphorothioate,

(155) 1-ethyl-1,4-dihydro-6,7-methylenedioxy-4-oxo-3-quinolinecarboxylic acid,

(156) (E)-1-(2,4-dichlorophenyl)-4,4-dimethyl-2-(1H-1,2,4-triazol-1-yl)-1-penten-3-ol,

(157) isopropyl 3,4-diethoxyphenylcarbamate,

(158) N-[4-chloro-2-fluoro-5-(1-methyl-2-propynyloxy)phenyl]-3,4,5,6-tetrahydrophthalimide,

(159) N-[4-chloro-2-fluoro-5-(pentyloxycarbonylmethoxy)phenyl]-3,4,5,6-tetrahydrophthalimide,

(160) 7-fluoro-6-(3,4,5,6-tetrahydrophthalimide)-4-(2-propynyl)-3,4-dihydro-1,4-benzoxazin-3(2H)-one,

(161) 2-[1-(ethoxyimino)ethyl]-3-hydroxy-5-[2-4-(trifluoromethyl)phenylthio]ethyl]-2-cyclohexen-1-one,

(162) 1-(4-chlorophenyl)-3-(2,6-difluorobenzoyl)urea,

(163) isopropyl (2E,4E)-11-methoxy-3,7,11-trimethyl-2,4-dodecadienoate,

(164) 2-tert-butylimino-3-isopropyl-5-phenyl-3,4,5,6-tetrahydro-2H-1,3,5-thiadiazin-4-one,

(165) 2-phenoxy-6-(neopentyloxymethyl)pyridine,

(166) 3-chloro-2-[7-fluoro-4-(2-propynyl)-3,4-dihydro-1,4-benzoxazin-3(2H)-on-6-yl]-4,5,6,7-tetrahydro-2H-indazole,

(167) 4'-chloro-2'-($\alpha$-hydroxybenzyl)isonicotinanilide,

(168) 6-(benzylamino)purine,

(169) 5-chloro-3-methyl-4-nitro-1H-pyrazole,

(170) 2-chloroethyltrimethylammonium chloride,

(171) 2-(3-chlorophenoxy)propionic acid,

(172) 3-(4-chlorophenyl)-1,1-dimethylurea,

(173) 2,4-dichlorophenoxyacetic acid,

(174) 3-(3,4-dichlorophenyl)-1,1-dimethylurea,

(175) 1,1'-ethylene-2,2'-bipyridinium dibromide,

(176) maleic hydrazide,

(177) 2,4-dinitro-6-sec-butylphenol,

(178) 2,4-dimethyl-5-(trifluoromethylsulfonylamino)acetanilide,

(179) 6-(furfurylamino)purine,

(180) β-hydroxyethylhydrazine,

(181) 3-indoleacetic acid,

(182) 3-methyl-5-(1-hydroxy-4-oxo-2,6,6-trimethyl-2-cyclohexen-1-yl) cis, trans-2,4-pentadienic acid,

(183) 1-naphthoxyacetic acid,

(184) 7-oxabicyclo[2.2.1]heptane-2,3-dicarboxylic acid monoalkylamine salt,

(185) 1-phenyl-3-[4-(2-chloropyridyl)]urea,

(186) sodium 5-chloro-1H-indazol-3-ylacetate,

(187) S,S-dimethyl 2-(difluoromethyl)-4-(2-methylpropyl)-6-(trifluoromethyl)pyridine-3,5-dicarbothioate,

(188) 3-(4,6-dimethoxy-1,3,5-triazin-2-yl)-1-[2-(2-methoxyethoxy)phenylsulfonyl]urea,

(189) exo-1-methyl-4-(1-methylethyl)-2-(2-methylphenylmethoxy)-7-oxabicyclo[2.2.1]heptane,

(190) 2',6'-diethyl-N-[(2-cis-butenoxy)methyl]-2-chloroacetanilide,

(191) 2,3-dihydro-3,3-dimethyl-5-benzofuranyl ethanesulfonate,

(192) 2',6'-dimethyl-N-(3-methoxy-2-thenyl)-2-chloroacetanilide,

(193) 1-(2-chloroimidazo[1,2-a]pyridin-3-ylsulfonyl)-3-(4,6-dimethoxy-2-pyrimidinyl)urea,

(194) 3-isopropyl-1H-2,1,3-benzothiadiazin-4(3H)-one-2,2-dioxide,

(195) 2-(1-ethoxyiminobutyl)-5-[2-(ethylthio)propyl]-3-hydroxycyclohex-2-en-1-one,

(196) 2',6'-diethyl-N-(2-propoxyethyl)-2-chloroacetanilide,

(197) 1,1'-dimethyl-4,4'-bipyridinium dichloride,

EP 0 565 354 A1

(198) S-(1-methyl-1-phenylethyl) piperidine-1-carbothioate,
(199) S-(2-methyl-1-piperidinecarbonylmethyl) O,O-dipropyl dithiophosphate,
(200) S-benzyl N-ethyl-N-(1,2-dimethylpropyl)thiolcarbamate,
(201) 2-chloro-4-ethylamino-6-isopropylamino-1,3,5-triazine,
(202) 2-methylthio-4,5-bis(ethylamino)-1,3,5-triazine,
(203) ammonium homoalanin-4-yl(methyl)phosphinate,
(204) 2-chloro-4,6-bis(ethylamino)-1,3,5-triazine,
(205) sodium L-2-amino-4-[(hydroxy)(methyl)phosphinoyl]butyryl-L-alanyl-L-alaninate,
(206) isopropylammonium N-(phosphonomethyl)glycinate,
(207) trimethylsulfonium N-(phosphonomethyl)glycinate,
(208) 2-methylthio-4-ethylamino-6-(2,2-dimethylpropylamino)-1,3,5-triazine,
(209) succinic 2,2-dimethylhydrazide, and
(210) 3-[2-(3,5-dimethyl-2-oxocyclohexyl)-2-hydroxymethyl]glutarimide.

In the composition according to the present invention, the pesticidally active ingredients may be used alone or in admixture of two or more of them with an optional mixing ratio. The contents of these active ingredients vary depending on the kinds of the ingredients. They are usually in the range of 0.01 - 80% by weight, preferably 0.1 - 50% by weight relative to the total weight of the composition of the present invention. In addition, when these active ingredients are liquid or are employed in the form of a solution in a solvent, the content of the liquid ingredient is usually in the range of 0.01 - 60% by weight, preferably 0.1 - 40% by weight relative to the total weight of the composition of the present invention.

As the surface active agents used in the present invention, there can be mentioned anionic surface active agents such as alkyl aryl sulfonates, alkyl naphthalene sulfonates, lignin sulfonates, dialkyl sulfosuccinates, polyoxyethylene alkyl aryl ether sulfates, alkali metal salts of copolymers having carboxyl groups and fatty acid salts and noinoic surface active agents such as polyoxyethylene alkyl ethers, polyoxyethylene alkyl phenyl ethers, polyoxyethylene styryl phenyl ethers, polyoxyethylene alkyl esters, sorbitan alkyl esters and polyoxyethylene sorbitan alkyl esters which are able to emulsify and disperse the active ingredient. Also, there may be used cationic surface active agents, or amphoteric surface active agents as occasion demands. These surface active agents are used alone or in admixture or the two or more. The amount used of the surface active agent is usually in the range of 0.1 - 70% by weight, preferably 1 - 40% by weight, more preferably 3 - 20% by weight, relative to the total weight of the composition of the present invention.

Specific examples of the carbonate used in the composition of the present invention are the salt of a carbonic acid such as sodium carbonate, potassium carbonate, lithium carbonate, ammonium carbonate, calcium carbonate, sodium bicarbonate, potassium bicarbonate, lithium bicarbonate, ammonium bicarbonate, sodium sesquicarbonate, potassium sesquicarbonate and ammonium sesquicarbonate. Sodium bicarbonate, sodium carbonate, potassium carbonate or potassium bicarbonate is preferred. The carbonate preferably contains 50% or more, particularly 70% or more, of particles having a particle size of 74 $\mu$m to 2,000 $\mu$m. For more uniformly mixing the components of pesticidal composition before tableting, use of a carbonate containing 5% or less, particularly 3% or less, of particles having a particle size of 1,000 $\mu$m or more is more preferable. The above-examplified carbonates can be used alone or as a mixture of two or more thereof in an optional ratio.

The term "solid acid" refers to solid substances which can generate carbon dioxide by reacting with the above carbonate in water.

Specific examples of the solid acid used in the composition of the present invention are citric acid, succinic acid, maleic acid, fumaric acid, tartaric acid, oxalic acid, malonic acid, malic acid, adipic acid, boric acid, sodium dihydrogen phosphate, potassium dihydrogen phosphate, benzoic acid, sulfamic acid, salicylic acid, ascorbic acid, glutamic acid, asparatic acid, sorbic acid, nicotinic acid and phenylacetic acid. Particularly, maleic acid, fumaric acid, citric acid, succinic acid, malic acid and tartaric acid are preferred. These acids are used alone or as a mixture of the two or more at any ratio.

The total amount of the carbonate and the solid acid used is usually in the range of 5 - 90% by weight, preferably 10 - 70% by weight, more preferably 20 - 60% by weight relative to the total weight of the composition of the present invention. The weight ratio of the carbonate to the solid acid is usually in the range of 1 : 10 - 10 : 1, preferably 1 : 5 - 5 : 1, more preferably 1 : 3 - 3 : 1.

For the composition of the present invention, talc, calcium stearate, magnesium stearate and titanium oxide may be used alone or as a mixture of two or more. Talc is particularly preferable. The weight percentage of this component (either the case where one of the above compounds is used or the case where two or more of the above compounds are used in combination) is usually 0.1 to 20% by weight, preferably 0.3 to 10% by weight, relative to the total weight of the composition of the present invention.

For the composition of the present invention, low-substituted hydroxypropyl cellulose, carboxymethyl cellulose, calcium carboxymethyl cellulose, crosslinked sodium carboxymethyl cellulose and cross-linked carbox-

6

ymethyl starch may be used alone or as a mixture of two or more. Low-substituted hydroxypropyl cellulose, carboxymethyl cellulose, calcium carboxymethyl cellulose and crosslinked sodium carboxymethyl cellulose are particularly preferable. The weight percentage of this component (either the case where one of the above compounds is used or the case where two or more of the above compounds are used in combination) is usually 0.3 to 30% by weight, preferably 0.5 to 20% by weight, relative to the total weight of the composition of the present invention.

The low-substituted hydroxypropyl cellulose is preferably one which has a hydroxypropoxy group content of approximately 5.0 - 16.0% by weight. It includes, for example, L-HPC LH-11, L-HPC LH-20, L-HPC LH21, L-HPC LH-22 and L-HPC LH-31 (manufactured by Shin-Etsu Chemical Co., Ltd.). The carboxymethyl cellulose is preferably one which has a degree of etherification of approximately 0.2 - 0.6%. It includes, for example, NS-300 (manufactured by Nichirin Chemical Industries, Ltd.). The calcium carboxymethyl cellulose includes, for example, E.C.G.-505 (manufactured by Nichirin Chemical Industries, Ltd.). The crosslinked sodium carboxymethyl cellulose includes, for example, Ac-Di-Sol (manufactured by ASAHI Chemical Industry Co., Ltd.). The crosslinked carboxymethyl starch includes, for example, PRIMOJEL (manufactured by AVEBE).

If necessary, solvents, silica, calcium silicate, desiccant, water-soluble carriers, water-soluble polymers, mineral carriers and vegetable carriers may be added to the composition of the present invention.

When the melting point of the pesticidally active ingredient is lower than 70°C, a solvent is, if necessary, added for lowering the viscosity of the pesticidally active ingredient at the time of production and preventing the crystallization of pesticidally active ingredient during storage at low temperatures. As the solvent, a nonvolatile or slightly volatile organic solvent is usually used. As the solvent used for controlling the viscosity and preventing the crystallization of the pesticidally active ingredient, there can be examplified solvents uniformly miscible with the pesticidally active ingredient, for example, aromatic hydrocarbons (e.g. phenylxylylethane, alkylbenzenes and methylnaphthalene), ketones, esters (e.g. diisodecyl adipate, ditridecyl phthalate and dialkyl phthalates), vegetable oils, mineral oils, liquid paraffin, polyethylene glycols having an average molecular weight of approximately 200 - 600 which is liquid at room temperature, polypropylene glycols, and glycol ethers (e.g. polypropylene glycol methyl ether) and the acetates thereof. The aromatic hydrocarbons (e.g. phenylxylylethane, alkylbenzenes and methylnaphthalene), the abovementioned esters, the above-mentioned glycol ethers and the acetates of the glycol ethers are particularly preferable. Irrespective of the melting point of the active ingredient, the solvent may be added merely for improving the dispersibility in water or efficacy of the active ingredient. In this case, a solvent which can be uniformly mixed with the active ingredient and has a specific gravity of 1.0 or less is preferable for suspending the active ingredient to improve the dispersibility in water. The amount of the solvent is usually 10 to 1,000% by weight, preferably 30 to 200% by weight, relative to the weight of the pesticidally active ingredient.

When the melting point of the pesticidally active ingredient is lower than 70°C or when a solvent is added, a calcined product of silica produced by wet process, silica produced by dry process, processed starch (dextrin) or calcium silicate may be added if necessary.

When one or more liquid components are used, i.e. when the pesticidally active ingredient is liquid or when the pesticidally active ingredient is dissolved in a solvent, the amount of the calcined product of silica produced by wet process, silica produced by dry process, processed starch or calcium silicate is usually 50 to 200% by weight, preferably 60 to 100% by weight, relative to the total weight of the liquid components. For example, a synthetic hydrated silicon dioxide (silica produced by wet process) such as Tokusil® GU-N, Tokusil® U, Tokusil® GU, Tokusil® N (manufactured by Tokuyama Soda Co., Ltd), Carplex® # 80, Carplex® # 67, Carplex® # 1120, Carplex® # 100, Carplex® #22S, Carplex® FPS-1, Carplex® FPS-2, Carplex® FPS-3, Carplex® FPS-4 (manufactured by Shionogi & Co., Ltd.), Nipsil® (manufactured by Nippon Silica) or Ultrasil (manufactured by Degussa) calcined at a temperature of 700 - 900°C, preferably 800 - 900°C, is used as a calcined product of silica produced by the wet process. Commercially available products such as Carplex® CS-5, Carplex® CS-7 (manufactured by Shionogi & Co., Ltd.) or Finesil® P-8 (manufactured by Tokuyama Soda Co., Ltd.) may be used as such. On the other hand, as silica produced by dry process, there is employed a light silicic anhydride such as AEROSIL 200 or AEROSIL 300 (manufactured by Degussa). Specific examples of the processed starch are PINEFLOW®, PINE-DEX® #2 (manufactured by Matsutani Chemical Co., Ltd.), etc. Specific examples of the calcium silicate are Florite® R (manufactured by Tokuyama Soda Co., Ltd.), etc.

Specific examples of the desiccant are boron oxide ($B_2O_3$), metaboric acid, barium oxide, mangesium oxide, aluminum oxide, calcium oxide and sodium aluminate.

Specific examples of the water-soluble carrier are urea, lactose, ammonium sulfate, sugar, dextrin, sodium chloride and sodium sulfate.

Specific examples of the water-soluble polymer are hydroxypropyl cellulose, gum arabic, methyl cellulose, methylethyl cellulose, polyvinyl alcohol, polyvinyl pyrrolidone, hydroxypropylmethyl cellulose, sodium carboxymethyl cellulose, and polyethylene glycols having an average molecular weight of 6,000-20,000.

7

Specific examples of the mineral carrier are kaolin clay, diatomaceous earth, pagodite, montmorillonite clay, acid clay, activated clay, attapulgite clay, pyrophyllite, bentonite and sericite.

Specific examples of the vegetable carriers are wheat flour, wood powder and starch.

When these desiccants, water-soluble carriers, water-soluble polymers, mineral carriers and vegetable carriers are incorporated into the composition of the present invention, the amount used is usually 0.1 to 30% by weight, preferably 0.5 to 20% by weight, relative to the total weight of the composition of the present invention.

The composition of the present invention may properly contain, besides them, bitters for prevention of drinking by mistake, stabilizers, efficacy improvers, phytotoxicity-reducing agents, colorants, perfumes, builders, etc.

The tablet of the present invention can be continuously produced by mixing the composition of the present invention thoroughly, for example, by means of a mixer such as a ribbon mixer, Henschel mixer, tumbling mixer, Lödige mixer or twin-cylinder mixer, and then molding the resulting mixture with a tableting machine or a briquetting machine. In this case, the density of the tablet can be controlled by controlling the degrees of entry of the lower and upper pestles of the tableting machine or controlling the feed rate, roll pressure and roll revolution rate of the briquetting machine. Usually, the apparent density of the tablet is 1.1 - 1.7 g/cm$^3$, preferably 1.2 - 1.6 g/cm$^3$. In this case, the porosity of the tablet is usually 10 to 45%, preferably 15 to 35%. The porosity is defined by the following equation,

$$\text{Porosity (\%)} = (1 - \frac{\text{Apparent density of tablets}}{\text{True density of powders or granules before used for preparing tablets}}) \times 100$$

wherein the true density of the powders or granules before being used for preparing tablets refers to the density of the substance constituting the powders or granules determined by dividing the weight of the substance by the solid volume of the substance, and is measured with a true density meter.

It is also possible to produce the tablet of the present invention with a weight falling within a certain range, by granulating some or all of the components of the composition of the present invention with a roll compactor, a slug machine or the like at a pressure of 30 kg/cm$^2$ or more, preferably 50 kg/cm$^2$ or more, disintegrating the resultng granulated product, and molding the thus obtained granules continuously, with other components if any, by a tableting machine or a briquetting machine.

In this case, the particle size of 70% or more of the granules is preferably between 100 and 3,000 $\mu$m, more preferably between 100 and 2,000 $\mu$m. In particular, the largest particle size of the granules is preferably 5,000 $\mu$m or less.

When the melting point of the pesticidally active ingredient is lower than 70°C, it is preferable to liquefy the pesticidally active ingredient by melting with heating or by dissolution in a solvent, allow silica to absorb the liquefied active ingredient, and then mix the thus treated silica in a mixer. When the melting point of the pesticidally active ingredient is 70°C or higher, it is preferable to grind the pesticially active ingredient alone or a mixture of the pesticidally active ingredient and a powdery surface active agent and the like previously by means of a dry-grinder such as an airmill, pinmill or hammer mill to adjust an average particle size to about 30 $\mu$m or less, preferably 15 $\mu$m or less, and then produce the tablet of the present invention in the same manner as above.

The shape of the tablet thus obtained may be any of various shapes such as non-edged disk shape, disk shape having angular corners, disk shape having round corners, lens shapes ranging in curvature from small to large, pillow shape, almond shape, finger shape, triangular shape, square shape, pentagonal shape, and capsular shape. The weight of the tablet is preferably about 5 to 100 g per tablet.

The tablet of the present invention can be directly applied to an irrigated paddy field, a river, a pond, a swamp, a moat, a field, a lawn, an orchard and a non-cultivated field. It can also be used as an appropriate dilution with water.

When the tablet of the present invention is applied to an irrigated paddy field, the applied amount thereof varies depending on the kinds or amounts of the active ingredients. It is usually in the approximate range of from 50 to 2,000 g, preferably in the approximate range of from 500 to 1,000 g per 10 are.

When the tablet of the present invention is applied directly, no special devices are generally required. For instance, an operator may go into a paddy field and uniformly apply the tablets of the present invention. He also may apply the tablets to one or more places of the paddy field. He also may apply the tablets to the sides of the footpaths of the paddy field or to the water inlet of the paddy field. Or he may distribute the tablets from the footpaths without going into the paddy field. By any of the application methods, the active ingredient can be distributed and diffused to all the corners of the paddy field. The tablets of the present invention may be thrown by hand from a rice transplanter or dropped therefrom at regular distance intervals. The tablets may be applied by an operator on a ship or boat on a pond, moat, swamp, river or the like. Aerial application of the tablet may also be carried out using a helicopter, airplane, radio-controlled airplane or the like.

The tablet of the present invention may usually be applied to an irrigated paddy field within the period of from immediately after puddling to about 2 weeks after heading, although the period varies depending on the kind of the active ingredient. In particular, the tablet of the present invention containing a herbicidally active ingredient may usually be applied within the period of from immediately after puddling to about 15 days after rice transplanting.

When applied to an irrigated paddy field, pond, river or the like, the tablet of the present invention is moved about by carbon dioxide generated therefrom. By the movement, its active ingredient is rapidly and uniformly distributed into water. Therefore, the active ingredient for controlling injurious organisms (pests; pathogenic fungi, weeds, etc.) in the tablet exerts a sufficient effect on the injurious organisms. Alternatively, the active ingredient for plant growth regulation in the tablet exerts a sufficient effect on crops. Moreover, since the active ingredient is distributed uniformly, the tablet is satisfactory also from the viewpoint of reduction of phytotoxicities to crops. The amount of the tablet of the present invention applied to a paddy field can be much reduced as compared with the amount of conventional compositions applied to a paddy field (for example, 3,000 to 4,000 g per 10 ares in the case of granules). Therefore, the tablet of the present invention is of high utility value also from the viewpoint of its production, transportation, storage and laborsaving application. Furthermore, when the tablet of the present invention is used after being diluted with water, it generates carbon dioxide in water, so that its disintegration, dispersion, emulsification and the like are easy. Therefore, the tablet of the present invention is convenient for handling.

The present invention is illustrated in further detail with reference to the following formulation examples and test examples. In the formulation examples, parts are all by weight.

First, formulation examples of the tablet of the present invention are described below.

Formulation Example 1

In a chemical mixer (mfd. by Kokusan Enshinki Ltd.; hereinafter the same applied), 9 parts of compound (128) and 10 parts of a spray-dried product of a 1:1 mixture of sodium dodecylbenzenesulfonate and Carplex® CS-7 (prepared by dispersing Carplex® CS-7 in an aqueous sodium dodecylbenzenesulfonate solution and spray-drying the resulting dispersion with a spray dryer to obtain powder; hereinafter the same applied) were thoroughly mixed. The resulting mixture was ground with an airmill to adjust the average particle size to 3.2 μm. The ground mixture is hereinafter referred to Mixture of compound (128). The average particle size was determined with Coulter Counter® Model TAII (mfd. by Coulter Electronics Inc.).

On the other hand, 10.5 parts of compound (123) and 8 parts of Carplex® CS-7 were thoroughly mixed in a chemical mixer to obtain a mixture (hereinafter Mixture of compound (123)).

Then, 19 parts of Mixture of compound (128) and 18.5 parts of Mixture of compound (123) obtained above, 5 parts of a spray-dried product of a 1:1 mixture of sodium dodecylbenzenesulfonate and Carplex® CS-7, 10 parts of L-HPC LH-11, 5 parts of talc, 20 parts of sodium carbonate (granular ash, mfd. by Tokuyama Soda Co., Ltd.; hereinafter the same applied), 20 parts of maleic acid and 2.5 parts of lactose were placed in a chemical mixer and mixed at a low revolution rate (200 rpm). The resulting mixture was placed in the hopper of a tableting machine (Model 7A-SM, mfd. by Kikusui Seisakusho Ltd.; hereinafter the same applied) and tableted by setting the depth of packing so as to adjust the weight of each tablet to 50 g. As a result, satisfactory tablets could be continuously produced without any trouble during the tableting. The tablet had a disk shape with a diameter of 50 mm and a thickness of about 18 mm, an apparent density of 1.41 $g/cm^3$ and a porosity of 24%.

Formulation Example 2

Tablets each with a weight of 50 g were continuously obtained by repeating the same procedure as in Formulation Example 1, except that the mixture used for tableting was replaced by a mixture prepared by adding 5 parts of GEROPON® SC-211 (a potassium salt of a polymer having carboxyl groups, mfd. by Rhone Poulenc), 8 parts of L-HPC LH-11, 5 parts of talc, 1 part of calcium stearate, 3.5 parts of boron oxide, 20 parts of sodium carbonate and 20 parts of maleic acid to 19 parts of Mixture of compound (128) and 18.5 parts of Mixture of compound (123) obtained in Formulation Example 1. The obtained tablet had a disk shape with a diameter of 50 mm and a thickness of about 18.5 mm, an apparent density of 1.38 $g/cm^3$ and a porosity of 26%.

Formulation Example 3

Tablets each with a weight of 50 g were continuously obtained by repeating the same procedure as in Formulation Example 2, except that fumaric acid was used in place of maleic acid. The obtained tablet had a disk shape with a diameter of 50 mm and a thickness of about 18 mm.

Formulation Example 4

Tablets each with a weight of 50 g were continuously obtained by repeating the same procedure as in Formulation Example 2, except that citric acid was used in place of maleic acid. The tablet had a disk shape with a diameter of 50 mm and a thickness of about 18 mm.

Formulation Example 5

Tablets each with a weight of 50 g were continuously obtained by repeating the same procedure as in Formulation Example 1, except that E.C.G.-505 was used in place of L-HPC LH-11. The obtained tablet had a disk shape with a diameter of 50 mm and a thickness of about 18 mm.

Formulation Example 6

Tablets each with a weight of 50 g were continuously obtained by repeating the same procedure as in Formulation Example 1, except that NS-300 was used in place of L-HPC LH-11. The obtained tablet had a disk shape with a diameter of 50 mm and a thickness of about 18 mm.

Formulation Example 7

Tablets each with a weight of 25 g were continuously obtained by repeating the same procedure as in Formulation Example 1, except that the depth of packing was set so as to adjust the weight of each tablet to 25 g. The obtained tablet had a disk shape with a diameter of 50 mm and a thickness of about 18 mm.

Formulation Example 8

Tablets each with a weight of 50 g were continuously obtained by repeating the same procedure as in Formulation Example 1, except that before the tableting, the mixture of the components was made into a sheet for making granules at a pressure of 150 kg/cm$^2$ with a roll compactor Model TF-MINI (mfd. by Freund Sangyo K.K.) and the sheet was disintegrated into granules with a breaker equipped with a 2,000-μm screen (a disintegrator mfd. by Freund Sangyo K.K.). The tablet had a disk shape with a diameter of 50 mm and a thickness of about 18 mm.

Formulation Example 9

Tablets each with a weight of 50 g were continuously obtained by repeating the same procedure as in Formulation Example 1, except that the mixture used. for tableting was replaced by a mixture prepared by adding 5 parts of a spray-dried product of a 1:1 mixture of sodium dodecyl benzenesulfonate and Carplex® CS-7, 5 parts of GEROPON® SC-211, 10 parts of L-HPC LH-11, 5 parts of boron oxide, 5 parts of talc, 0.5 part of calcium stearate, 2 parts of Cellogen® 7A (sodium carboxymethyl cellulose mfd. by Dai-ichi Rogyo Seiyaku Co., Ltd.), 25 parts of sodium carbonate and 23.5 parts of maleic acid to Mixture of compound (128) obtained in Formulation Example 1. The tablet had a disk shape with a diameter of 50 mm and a thickness of about 18 mm, an apparent density of 1.41 g/cm$^3$ and a porosity of 28%.

Formulation Example 10

In a Henschel mixer (mfd. by Mitsui-Miike Kakoki Co., Ltd.; hereinafter the same applied), 9 parts of compound (128) and 2 parts of a spray-dried product of a 1:1 mixture of sodium dodecylbenzenesulfonate and Carplex® CS-7 were thoroughly mixed. The resulting mixture was ground with an airmill. The average particle size of the ground mixture was determined with Coulter Counter® Model TAII to be 3.0 μm. The ground mixture is hereinafter referred to as Ground Premix of compound (128).

On the other hand, 10.5 parts of compound (123) and 8 parts of Carplex® CS-7 were thoroughly mixed in a beaker by the use of a spurtle. The resulting mixture is hereinafter referred to as Premix of compound (123).

Then, 11 parts of Ground Premix of compound (128), 18.5 parts of Premix of compound (123), 10.5 parts of a spray-dried product of a 1:1 mixture of sodium dodecylbenzenesulfonate and Carplex® CS-7, and 20 parts of maleic acid were thoroughly mixed in a Henschel mixer at a high revolution rate (1,200 rpm). The resulting mixture was made into a sheet for making granules at a pressure of 50 kg/cm$^2$ with a roll compactor Model TF-MINI. The sheet was then disintegrated with a breaker equipped with a 1,410-µm screen, to obtain granules.

To 40 parts of the granules were added 5 parts of talc, 2 parts of E.C.G.-505 and 53 parts of sodium carbonate. The resulting mixture was mixed in a bag.

The mixture mixed in the bag was placed in the hopper of a tableting machine and tableted by setting the depth of packing so as to adjust the weight of each tablet to 50 g. As a result, satisfactory tablets could be continuously produced without any trouble during the tableting. The tablet had a disk shape with angular corners which had a diameter of 50 mm and a thickness of about 18 mm.

Formulation Example 11

11 Parts of Ground Premix of compound (128) obtained in Formulation Example 10, 18.5 parts of Premix of compound (123) obtained therein, 0.5 parts of a spray-dried product of a 1 : 1 mixture of sodium dodecylbenzene sulfonate and Carplex® CS-7, 7.5 parts of MORWET EFW (a surface active agent mfd. by DESOTO) and 20 parts of maleic acid were thoroughly mixed in a Henschel mixer at a high revolution rate (1,200 rpm). The resulting mixture was made into a sheet for making granules at a pressure of 50 kg/cm² with a roll compactor Model TF-MINI. The sheet was then disintegrated with a breaker equipped with a 1,410-µm screen, to obtain granules. To 57.5 parts of the granules were added 10 parts of talc, 5 parts of PRIMOJEL and 27.5 parts of sodium carbonate. The resulting mixture was mixed in a bag. The mixture mixed in the bag was placed in the hopper of a tableting machine and tableted by setting the depth of packing so as to adjust the weight of each tablet to 50 g. As a result, satisfactory tablets could be continuously produced without any trouble during the tableting. The tablet had a disk shape with angular corners which had a diameter of 50 mm and a thickness of about 18.5 mm.

Formulation Example 12

11 Parts of Ground Premix of compound (128) obtained in Formulation Example 10, 18.5 parts of Premix of compound (123) obtained therein, 0.5 parts of a spray-dried product of a 1:1 mixture of sodium dodecylbenzenesulfonate and Carplex® CS-7, 7.5 parts of MORWET EFW, 20 parts of maleic acid and 5 parts of boron oxide were thoroughly mixed in a Henschel mixer at a high revolution rate (1,200 rpm). The resulting mixture was made into a sheet for making granules at a pressure of 50 kg/cm² with a roll compactor Model TF-MINI. The sheet was then disintegrated with a breaker equipped with a 1,410-µm screen, to obtain granules. To 62.5 parts of the granules were added 5 parts of talc, 3 parts of NS-300 and 29.5 parts of sodium carbonate. The resulting mixture was mixed in a bag. The mixture mixed in the bag was placed in the hopper of a tableting machine and tableted by setting the depth of packing so as to adjust the weight of each tablet to 50 g. As a result, satisfactory tablets could be continuously produced without any trouble during the tableting. The tablet had a disk shape with angular corners which had a diameter of 50 mm and a thickness of about 18.5 mm.

Formulation Example 13

6 Parts of compound (97) and 2 parts of maleic acid were thoroughly mixed in a Henschel mixer, and the resulting mixture was ground with an airmill. The average particle size of the ground mixture was determined with Coulter Counter® Model TAII to be 3.1 µm. The ground mixture is hereinafter referred to as Ground Premix of compound (97).

8 Parts of Ground Premix of compound (97), 22 parts of PINE-DEX® #2, 5 parts of a spray-dried product of a 1:1 mixture of sodium dodecylbenzenesulfonate and Carplex® CS-7, 2 parts of talc, 3 parts of NS-300, 27 parts of maleic acid and 5 parts of boron oxide were thoroughly mixed in a Henschel mixer at a high revolution rate (1,200 rpm). Then, 28 parts of sodium carbonate was added thereto. The resulting mixture was thoroughly mixed in a Henschel mixer at a low revolution rate (700 rpm). The mixture mixed in the Henschel mixer was placed in the hopper of a tableting machine and tableted by setting the depth of packing so as to adjust the weight of each tablet to 50 g. As a result, satisfactory tablets could be continuously produced without any trouble during the tableting. The tablet had a disk shape with angular corners which had a diameter of 50 mm and a thickness of about 19 mm.

Formulation Example 14

Tablets having a disk shape with angular corners were obtained by repeating the same procedure as in Formulation Example 13, except that the thickness of tablet was changed to about 18.5 mm.

Formulation Example 15

Tablets having a disk shape with angular corners were obtained by repeating the same procedure as in Formulation Example 13, except that the thickness of tablet was changed to about 19.5 mm.

Formulation Example 16

8 Parts of Ground Premix of compound (97) obtained in Formulation Example 13, 5 parts of a spray-dried product of a 1:1 mixture of sodium dodecylbenzenesulfonate and Carplex® CS-7, 28 parts of maleic acid, 5 parts of talc, 5 parts of E.C.G.-500, 2 parts of metaboric acid and 29 parts of pagodite were thoroughly mixed in a Henschel mixer at a high revolution rate (1,200 rpm). Then, 28 parts of sodium carbonate was added thereto. The resulting mixture was thoroughly mixed in a Henschel mixer at a low revolution rate (700 rpm). The mixture mixed in the Henschel mixer was placed in the hopper of a tableting machine and tableted by setting the depth of packing so as to adjust the weight of each tablet to 50 g. As a result, satisfactory tablets could be continuously produced without any trouble during the tableting. The tablet had a disk shape with angular corners which had a diameter of 50 mm and a thickness of about 20 mm.

Formulation Example 17

55 parts of Ground Premix of compound (128) obtained in Formulation Example 10, 1 part of calcium stearate, 4 parts of NS-300, 1 part of talc and 19 parts of maleic acid were thoroughly mixed in a Henschel mixer at a high revolution rate (1,200 rpm). Then, 20 parts of sodium carbonate was added thereto. The resulting mixture was thoroughly mixed in a Henschel mixer at a low revolution rate (700 rpm). The mixture mixed in the Henschel mixer was placed in the hopper of a tableting machine and tableted by setting the depth of packing so as to adjust the weight of each tablet to 25 g. As a result, satisfactory tablets could be continuously produced without any trouble during the tableting. The tablet had a disk shape with angular corners which had a diameter of 50 mm, a thickness of about 11 mm, an apparent density of 1.21 g/cm$^3$ and a porosity of 22%.

Formulation Example 18

A solution of compound (125) was obtained by mixing 5 parts of compound (125) and 10 parts of phenylxylylethane.

Then, 11 parts of Carplex® CS-7, 10 parts of a spray-dried product of a 1:1 mixture of sodium dodecylbenzenesulfonate and Carplex® CS-7, 5 parts of boron oxide and 28 parts of fumaric acid were thoroughly mixed in a Henschel mixer at a high revolution rate (1,200 rpm). Thereafter, 15 parts of the aforesaid solution of compound (125) was added thereto. The resulting mixture was thoroughly mixed. The thoroughly mixed mixture was made into a sheet for making granules at a pressure of 50 kg/cm$^2$ with a roll compactor Model TF-MINI. The sheet was then disintegrated with a breaker equipped with a 1,410-μm screen, to obtain granules. To 69 parts of the granules were added 5 parts of talc, 2 parts of E.C.G.-505 and 24 parts of sodium carbonate. The resulting mixture was mixed in a bag. The mixture mixed in the bag was placed in the hopper of a tableting machine and tableted by setting the depth of packing so as to adjust the weight of each tablet to 50 g. As a result, satisfactory tablets could be continuously produced without any trouble during the tableting. The tablet had a disk shape with angular corners which had a diameter of 50 mm and a thickness of about 17.5 mm.

Formulation Example 19

Tablets having a disk shape with angular corners were obtained by repeating the same procedure as in Formulation Example 18, except that Solvesso 150 (a solvent mfd. by Exxon Chemical Co.) was used in place of phenylxylylethane.

Formulation Example 20

A solution of compound (125) was obtained by mixing 5 parts of compound (125), 10 parts of Vinicizer® 40 (a solvent mfd. by Kao Corporation) and 3 parts of Sorpol 3598 (a surface active agent mfd. by TOHO KAGAKU K.K.). Then, 27 parts of PINEFLON®, 2.5 parts of boron oxide, 22 parts of maleic acid, 5 parts of talc, 0.5 part of magnesium stearate, 3 parts of NS-300 and 22 parts of sodium carbonate were thoroughly mixed in a Henschel mixer. Thereafter, 18 parts of the aforesaid solution of compound (125) was added thereto. The resulting mixture was thoroughly mixed. The thoroughly mixed mixture was placed in the hopper of a tableting machine and tableted by setting the depth of packing so as to adjust the weight of each tablet to 50 g. As a result, satisfactory tablets could be continuously obtained without any trouble during the tableting. The tablet had a disk shape with angular corners which had a diameter of 50 mm and a thickness of about 18 mm.

Formulation Example 21

In a Henschel mixer, 45 parts of compound (128) and 4.5 parts of a spray-dried product of a 1:1 mixture of sodium dodecylbenzenesulfonate and Carplex® CS-7 were thoroughly mixed. The resulting mixture was ground with a centrifugal grinder. The average particle size of the ground mixture was determined with Coulter Counte® Model TAII to be 11.4 µm. Then, 49.5 parts of this ground mixture of compound (128), 0.5 part of a spray-dried product of a 1:1 mixture of sodium dodecylbenzenesulfonate and Carplex® CS-7, 2 parts of boron oxide and 20 parts of maleic acid were thoroughly mixed in a Henschel mixer at a high revolution rate (1,200 rpm). Thereafter, 3 parts of talc, 5 parts of E.C.G.-505 and 20 parts of sodium carbonate were added thereto. The resulting mixture was thoroughly mixed. The thoroughly mixed mixture was placed in the hopper of a tableting machine and tableted by setting the depth of packing so as to adjust the weight of each tablet to 50 g. As a result, satisfactory tablets could be continuously produced without any trouble during the tableting. The tablet had a disk shape with angular corners which had a diameter of 50 mm and a thickness of about 21.5 mm.

Formulation Example 22

First, a solution of compound (2) was obtained by mixing 5 parts of compound (2), 10 parts of phenylxy-lylethane and 3 parts of Sorpol 3598. Then, 27 parts of PINEFLOW® 10 parts of boron oxide, 18 parts of maleic acid, 5 parts of talc, 0.5 part of calcium stearate and 3 parts of E.C.G.-505 were placed in a chemical mixer and mixed at 500 rpm for 5 minutes. Thereafter, 18.5 parts of sodium carbonate and 18 parts of the aforesaid solution of compound (2) were added thereto. The resulting mixture was mixed at 300 rpm for 5 minutes. The thus mixed mixture was placed in the hopper of a tableting machine and tableted by setting the depth of packing so as to adjust the weight of each tablet to 20 g. As a result, satisfactory tablets could be continuously produced without any trouble during the tableting. The tablet had a disk shape with angular corners which had a diameter of 40 mm and a thickness of about 11.5 mm, an apparent density of 1.4 g/cm$^3$ and a porosity of 15%.

Formulation Example 23

Repeating the same procedure as in Formulation Example 22 except that compound (3) was used in place of compound (2) continuously gave satisfactory tablets without any trouble during the tableting. The tablet had a disk shape with angular corners which had a diameter of 40 mm and a thickness of about 11.5 mm.

Formulation Example 24

Repeating the same procedure as in Formulation Example 22 except that compound (4) was used in place of compound (2) continuously gave satisfactory tablets without any trouble during the tableting. The tablet had a disk shape with angular comers which had a diameter of 40 mm and a thickness of about 11.5 mm.

Formulation Example 25

Repeating the same procedure as in Formulation Example 22 except that compound (5) was used in place of compound (2) continuously gave satisfactory tablets without any trouble during the tableting. The tablet had a disk shape with angular corners which had a diameter of 40 mm and a thickness of about 11.5 mm.

Formulation Example 26

Repeating the same procedure as in Formulation Example 22 except that compound (6) was used in place of compound (2) continuously gave satisfactory tablets without any trouble during the tableting. The tablet had a disk shape with angular comers which had a diameter of 40 mm and a thickness of about 11.5 mm.

Formulation Example 27

Repeating the same procedure as in Formulation Example 22 except that citric acid was used in place of maleic acid continuously gave satisfactory tablets without any trouble during the tableting. The tablet had a disk shape with angular corners which had a diameter of 40 mm and a thickness of about 11 mm.

Formulation Example 28

Repeating the same procedure as in Formulation Example 22 except that DL-malic acid was used in place of maleic acid continuously gave satisfactory tablets without any trouble during the tableting. The tablet had a disk shape with angular corners which had a diameter of 40 mm and a thickness of about 12 mm.

Formulation Example 29

In a chemical mixer were placed 40 parts of compound (153) and 4 parts of a spray-dried product of a 1:1 mixture of sodium dodecylbenzenesulfonate and Carplex® CS-7, and mixed at 1,000 rpm for 10 minutes. The resulting mixture was ground with a pinmill. The average particle size of the ground mixture was determined with Coulter Counter® Model TAII to be 4.9 $\mu$m. Then, 44 parts of this ground mixture of compound (153), 10 parts of MORWET EFW, 3 parts of boron oxide and 17 parts of maleic acid were placed in a chemical mixer and mixed at 1,000 rpm for 5 minutes. Thereafter, 3 parts of titanium oxide, 5 parts of Ac-Di-Sol and 18 parts of sodium carbonate were added thereto. The resulting mixture was mixed at 200 rpm for 2 minutes. The thus mixed mixture was placed in the hopper of a tableting machine and tableted by setting the depth of packing so as to adjust the weight of each tablet to 20 g. As a result, satisfactory tablets could be continuously produced without. any trouble during the tableting. The tablet had a disk shape with angular comers which had a diameter of 40 mm and a thickness of about 13.5 mm, an apparent density of 1.21 g/cm³ and a porosity of 26%.

Formulation Example 30

In a Henschel mixer, 40 parts of compound (154) and 4 parts of a spray-dried product of a 1:1 mixture of sodium dodecylbenzenesulfonate and Carplex® CS-7 were thoroughly mixed. The resulting mixture was ground with a pinmill. The average particle size of the ground mixture was determined with Coulter Counter® Model TAII to be 5.2 $\mu$m. Then, 44 parts of this ground mixture of compound (154), 10 parts of MORWET EFW, 4 parts of boron oxide and 16 parts of maleic acid were placed in a chemical mixer and mixed at 1,000 rpm for 5 minutes. Thereafter, 3 parts of talc, 7 parts of E.C.G.-505 and 16 parts of sodium carbonate were added thereto. The resulting mixture was mixed at 200 rpm for 2 minutes. The thus mixed mixture was placed in the hopper of a tableting machine and tableted by setting the depth of packing so as to adjust the weight of each tablet to 20 g. As a result, satisfactory tablets could be continuously obtained without any trouble during the tableting. The tablet had a disk shape with angular corners which had a diameter of 40 mm and a thickness of about 13.5 mm.

Formulation Example 31

In a Henschel mixer, 40 parts of compound (155) and 4 parts of a spray-dried product of a 1:1 mixture of sodium dodecylbenzenesulfonate and Carplex® CS-7 were thoroughly mixed. The resulting mixture was ground with a pinmill. The average particle size of the ground mixture was determined with Coulter Counter® Model TAII to be 4.2 $\mu$m. Then, 44 parts of this ground mixture of compound (155), 5 parts of MORWET EFW, 5 parts of boron oxide and 16 parts of fumaric acid were placed in a chemical mixer and mixed at 1,000 rpm for 5 minutes. Thereafter, 3 parts of talc, 5 parts of E.C.G..-505 and 22 parts of sodium carbonate were added thereto. The resulting mixture was mixed at 200 rpm for 2 minutes. The thus mixed mixture was placed in the hopper of a tableting machine and tableted by setting the depth of packing so as to adjust the weight of each tablet to 20 g. As a result, satisfactory tablets could be continuously obtained without any trouble during the tableting. The tablet had a disk shape with angular corners which had a diameter of 40 mm and a thickness of about 14 mm.

Formulation Example 32

In a Henschel mixer, 40 parts of compound (156) and 4 parts of a spray-dried product of a 1:1 mixture of sodium dodecylbenzenesulfonate and Carplex® CS-7 were thoroughly mixed. The resulting mixture was ground with a pinmill. The average particle size of the ground mixture was determined with Coulter Counter® Model TAII to be 5.5 $\mu$m. Then, 44 parts of this ground mixture of compound (156), 5 parts of MORWET EFW, 5 parts of boron oxide and 22 parts of citric acid were placed in a chemical mixer and mixed at 1,000 rpm for 5 minutes. Thereafter, 3 parts of talc, 5 parts of E.C.G.-505 and 16 parts of sodium carbonate were added thereto. The resulting mixture was mixed at 200 rpm for 2 minutes. The thus mixed mixture was placed in the hopper of a tableting machine and tableted by setting the depth of packing so as to adjust the weight of each tablet to 20 g. As a result, satisfactory tablets could be continuously obtained without any trouble during the tableting. The tablet had a disk shape with angular comers which had a diameter of 40 mm and a thickness of about 13.5 mm.

Formulation Example 33

In a chemical mixer were placed 40 parts of compound (157) and 4 parts of a spray-dried product of a 1:1 mixture of sodium dodecylbenzenesulfonate and Carplex® CS-7, and mixed at 1,000 rpm for 10 minutes. The resulting mixture was ground with a pinmill. The average particle size of the ground mixture was determined with Coulter Counter® Model TAII to be 5.1 μm. Then, 44 parts of this ground mixture of compound (157), 10 parts of MORWET EFW, 3 parts of boron oxide and 17 parts of maleic acid were placed in a chemical mixer and mixed at 1,000 rpm for 5 minutes. Thereafter, 3 parts of talc, 5 parts of Ac-Di-Sol and 18 parts of sodium carbonate were added thereto. The resulting mixture was mixed at 100 rpm for 2 minutes. The thus mixed mixture was placed in the hopper of a tableting machine and tableted by setting the depth of packing so as to adjust the weight of each tablet to 20 g. As a result, satisfactory tablets could be continuously obtained without any trouble during the tableting. The tablet had a disk shape with angular corners which had a diameter of 40 mm and a thickness of about 13.5 mm.

Formulation Example 34

In a chemical mixer were placed 40 parts of compound (159) and 4 parts of a spray-dried product of a 1:1 mixture of sodium dodecylbenzenesulfonate and Carplex® CS-7, and mixed at 1,000 rpm for 10 minutes. The resulting mixture was ground with a pinmill. The average particle size of the ground mixture was determined with Coulter Counter® Model TAII to be 4.9 μm. Then, 44 parts of this ground mixture of compound (159), 5 parts of MORWET EFW, 3 parts of boron oxide and 20 parts of maleic acid were placed in a chemical mixer and mixed at 1,000 rpm for 5 minutes. Thereafter, 3 parts of talc, 5 parts of E.C.G.-505 and 20 parts of sodium carbonate were added thereto. The resulting mixture was mixed at 200 rpm for 2 minutes. The thus mixed mixture was placed in the hopper of a tableting machine and tableted by setting the depth of packing so as to adjust the weight of each tablet to 20 g. As a result, satisfactory tablets could be continuously obtained without any trouble during the tableting. The tablet had a disk shape with angular corners which had a diameter of 40 mm and a thickness of about 13.5 mm.

Formulation Example 35

In a chemical mixer were placed 40 parts of compound (160) and 4 parts of a spray-dried product of a 1:1 mixture of sodium dodecylbenzenesulfonate and Carplex® CS-7, and mixed at 1,000 rpm for 10 minutes. The resulting mixture was ground with a pinmill. The average particle size of the ground mixture was determined with Coulter Counter® Model TAII to be 5.5 μm. Then, 44 parts of this ground mixture of compound (160), 5 parts of MORWET EFW, 3 parts of boron oxide and 20 parts of maleic acid were placed in a chemical mixer and mixed at 1,000 rpm for 5 minutes. Thereafter, 3 parts of talc, 5 parts of E.C.G.-505 and 20 parts of sodium carbonate were added thereto. The resulting mixture was mixed at 200 rpm for 2 minutes. The thus mixed mixture was placed in the hopper of a tableting machine and tableted by setting the depth of packing so as to adjust the weight of each tablet to 20 g. As a result, satisfactory tablets could be continuously obtained without any trouble during the tableting. The tablet had a disk shape with angular corners which had a diameter of 40 mm and a thickness of about 13.5 mm.

Next, test examples are described below.

Test Example 1

Ten of the tablets obtained in each of Formulation Examples 1 to 9 were dropped to a concrete floor from a height of 0.5 m. All of the ten tablets were hardly broken. The result demonstrated that these tablets had a sufficient hardness.

Test Example 2

One each of the tablets obtained in Formulation Examples 1 to 9 was thrown in a polyethylene vessel (115 cm long, 70 cm wide and 19 cm high) containing 80 liters of water, substantially at the center of the vessel. The tablet was dissolved while generating carbon dioxide, and diffused into the water in the vessel substantially uniformly. Any tablets of the formulation examples gave the same result.

Test Example 3

One each of the tablets obtained in Formulation Examples 10 to 17 was spot-applied at the center of a polyethylene pool of about 70 cm³ in width and about 115 cm in length containing tap water at about 20°C in such an amount that the depth of water was about 5 cm. The tablet was completely disintegrated and dispersed in 10 to 60 minutes and diffused into the water in the pool substantially uniformly. Any tablets of the formulation examples gave the same result.

The composition of the present invention permits continuous production of satisfactory tablets by virtue of its make-up. The tablet of the present invention produced from the composition is suitable for elimination or reduction of labor in its application. Moreover, it is superior in disintegrability and dispersibility in water and diffusion into water. Furthermore, it has a stable effect as an agent for controlling pests, weeds, etc. and as a plant growth regulator.

**Claims**

1. A pesticidal composition which comprises:
   (a) at least one pesticidally active ingredient,
   (b) at least one surface active agent,
   (c) at least one carbonate,
   (d) at least one solid acid,
   (e) at least one of talc, calcium stearate, magnesium stearate and titanium oxide, and
   (f) at least one of low-substituted hydroxypropyl cellulose, carboxymethyl cellulose, calcium carboxymethyl cellulose, crosslinked sodium carboxymethyl cellulose and crosslinked carboxymethyl starch,
      at least one of components (c) and (d) being water soluble.

2. A pesticidal composition according to claim 1, which is in the form of a tablet.

3. A pesticidal composition according to claim 2, wherein the weight of the tablet is within the range of from 5 to 100 g per tablet.

4. A pesticidal composition according to claim 1, 2 or 3, wherein component (f) is low-substituted hydroxypropyl cellulose.

5. A pesticidal composition according to claim 1, 2 or 3, wherein component (f) is carboxymethyl cellulose.

6. A pesticidal composition according to claim 1, 2 or 3, wherein component (f) is calcium carboxymethyl cellulose.

7. A pesticidal composition according to claim 1, 2 or 3, wherein component (f) is crosslinked sodium carboxymethyl cellulose.

8. A pesticidal composition according to claim 1, 2 or 3, wherein component (f) is crosslinked carboxymethyl starch.

9. A pesticidal composition according to any preceding claim, which further comprises a desiccant.

10. A pesticidal composition according to any preceding claim, wherein the weight percentage of component (a) is within the range of from 0.01 to 80%, the weight percentage of component (b) is within the range of from 0.1 to 70%, the weight percentage of the sum of component (c) and component (d) is within the range of from 5 to 90%, the weight percentage of component (e) is within the range of from 0.1 to 20%, and the weight percentage of component (f) is within the range of from 0.3 to 30% relative to the total weight of the composition.

**European Patent Office**

# EUROPEAN SEARCH REPORT

Application Number

EP 93 30 2721

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-847 370 (D.P.H. JOSEPHS) <br> * example * | 1-10 | A01N25/34 |
| A | EP-A-0 367 887 (CIBA-GEIGY) <br> * examples * | 1-10 | |
| A | EP-A-0 228 164 (THE BOOTS CO.) <br> * claim 1 * <br> * page 2, line 29 - line 36 * | 1-10 | |
| A | CHEMICAL ABSTRACTS, vol. 74, no. 16, 1971, Columbus, Ohio, US; abstract no. 79639z, <br> * abstract * <br> & JP-A-7 038 639 (SANKYO) | 1-10 | |
| A | PHARMAZIE <br> vol. 45, no. 2, 1990, BERLIN DD <br> pages 89 - 101 <br> P.C. SCHMIDT ET.AL. 'brausetabletten' <br> * page 92; table 3 * <br> * page 99; example 11 * | 1-10 | TECHNICAL FIELDS SEARCHED (Int. Cl.5) |
| A | MANUFACTURING CHEMIST AND AEROSOL NEWS <br> vol. 47, no. 1, 1976, LONDON GB <br> pages 25 - 26 <br> K.A. KHAN ET. AL. 'choosing the right tablet disintegrant' <br> * paragraph 1 * | 1-10 | A01N <br> A61K |

The present search report has been drawn up for all claims

| Place of search | Date of completion of the search | Examiner |
|---|---|---|
| THE HAGUE | 30 JULY 1993 | DECORTE D.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)